# EUROPEAN PATENT APPLICATION

(11) **EP 4 318 742 A1**
(43) Date of publication of application: **07.02.2024**
(21) Application number: 22827310.8
(22) Date of filing: 27.05.2022
(51) Int. Cl.: H01M 50/103, H01M 50/166

(54) **BATTERY CASE, BATTERY USING BATTERY CASE, AND ELECTRONIC DEVICE USING BATTERY**

(30) Priority: 23.06.2021 CN 202110699260
(71) Applicant: BYD Company Limited, Shenzhen, Guangdong 518118 (CN)
(72) Inventor: LUAN, Yanping, Shenzhen, Guangdong 518118 (CN); GU, Liangliang, Shenzhen, Guangdong 518118 (CN); WANG, Bing, Shenzhen, Guangdong 518118 (CN); WEI, Yanwei, Shenzhen, Guangdong 518118 (CN)
(74) Representative: DehnsGermany Partnerschaft von Patentanwälten
(86) International application number: PCT/CN2022/095400
(87) International publication number: WO 2022/267813

(57) **Abstract**

A battery housing (10) includes an integrally formed plate body (110), the plate body is in a preset shape in an unfolded state, and is provided with multiple preset folding portions, and the plate body is separated to form a cover plate and multiple side plates along the multiple folding portions. The multiple side plates are configured to be folded along the corresponding folding portions and connected to form a middle housing (1101) with closed peripheral sides and open ends, and the cover plate is configured to be folded along the preset folding portion and close the corresponding open end (1102) of the middle housing to form an accommodating space for accommodating an electrochemical unit (20) inside the middle housing.

## Description

### CROSS-REFERENCE TO RELATED APPLICATIONS

This application claims priority to Chinese Patent Application No. 202110699260.2 filed on June 23, 2021, which is incorporated herein by reference in its entirety.

### FIELD

The present disclosure relates to the field of batteries, and more specifically, to a battery housing, a battery using the battery housing, and an electronic device using the battery.

### BACKGROUND

In the related art, a housing of a secondary battery, such as a lithium ion battery, generally includes an aluminum-plastic film and an alloy housing. The alloy housing is hard and has pressure-resistant characteristics, so that the battery package reliability is improved. It also does not require relatively wide sealing edges and folding edges, and has a thin housing thickness, so that an energy density of a cell can be improved. However, this alloy housing generally includes a first housing formed by stamping and stretching and configured to provide an accommodating space, and a second housing configured to close an open side of the first housing. R round corners of the first housing are easy to break and generate fold deformation when being stretched, so that a processing yield of the housing is low. Flanges for welding and sealing on peripheries of the first housing and the second housing occupy a general space of the battery, an effective space utilization rate of the battery is limited to a certain degree, and the energy density improvement of the battery is further limited. Therefore, there is room for improvement.

### SUMMARY

In view of this, the present disclosure discloses a battery housing, a battery using the battery housing, and an electronic device using the battery, and intends to improve a processing yield and use reliability of the battery housing and reduce occupation of the battery housing on a general space of the battery.

Specific technical solutions are as follows:

A battery housing includes an integrally formed plate body. The plate body is in a preset shape in an unfolded state and is provided with multiple preset folding portions. The plate body is separated to form a cover plate and multiple side plates along the multiple folding portions. The multiple side plates are configured to be folded along the corresponding folding portions and connected to form a middle housing with closed peripheral sides and open ends, and the cover plate is configured to be folded along the preset folding portion and close the corresponding open end of the middle housing to form an accommodating space for accommodating an electrochemical unit inside the middle housing.

In some implementations, when the plate body is in the unfolded state, the multiple side plates are distributed in a same direction. The plate body includes two cover plates distributed at two sides of the side plates along the distribution direction of the side plates.

The multiple side plates are in end-to-end connection after being folded along the corresponding folding portions to form a box-shaped middle housing with two open ends. The two cover plates respectively close the two open ends of the middle housing after being folded along the preset folding portions.

In some implementations, when the plate body is in the unfolded state,
the multiple side plates include: multiple side plates distributed in a same direction and a side plate located at one side of the side plates along the distribution direction of the multiple side plates. The multiple side plates distributed in the same direction are in end-to-end connection after being folded along the corresponding folding portions to form a box-shaped middle housing with two open ends, and the side plate closes one open end of the middle housing after being folded along the preset folding portion.

One cover plate is provided and located at another side of the side plates along the distribution direction of the multiple side plates, and closes another open end of the middle housing after being folded along the preset folding portion.

In some implementations, the side plates and the cover plate are approximately rectangular shaped. A shape of the cover plate is matched with a shape of the corresponding open end of the middle housing.

In some implementations, the cover plate is folded along the preset folding portion and closes the corresponding open end of the middle housing, and an outer edge of the cover plate protrudes out of an outer periphery of the corresponding open end.

In some implementations, the battery housing further includes a lining plate, and the lining plate is connected to one side of the cover plate.

After the cover plate is folded along the preset folding portion and closes the corresponding open end of the middle housing, the lining plate is located at one side of the cover plate facing the corresponding open end.

The battery housing further includes an electrolyte solution filling port penetrating through the lining plate and the corresponding cover plate.

In some implementations, a peripheral dimension of the lining plate is less than a peripheral dimension of the cover plate, and the peripheral dimension of the cover plate is greater than a peripheral dimension of the corresponding open end of the middle housing.

In some implementations, a thickness of the lining plate is greater than a thickness of the cover plate.

In some implementations, a weld seam for welding the electrolyte solution filling port sealing cover with the cover plate and the lining plate includes a first weld seam and a second weld seam, and a distance from the second weld seam to an edge of the electrolyte solution filling port is greater than a distance from the first weld seam to the edge of the electrolyte solution filling port.

In some implementations, a distance from a position of the first weld seam to a position of the edge of the electrolyte solution filling port ranges from 0.05 mm to 0.1 mm.

In some implementations, the plate body is a metal plate with a uniform thickness. Preset positions of the multiple side plates are connected in a welding manner to form the middle housing with closed peripheral sides and open ends, and the cover plate and the middle housing are welded to close the corresponding open end of the middle housing.

In some implementations, an area of an outer side surface of the cover plate is less than an area of any one outer surface of the middle housing.

In some implementations, a material of the plate body includes one or more of nickel, nickel alloy, carbon steel, and alloy steel.

The present disclosure further discloses a battery. The battery includes at least one battery unit. The battery unit includes any one of the above battery housings and an electrochemical unit accommodated in the battery housing.

The present disclosure further discloses an electronic device. The electronic device includes an electrical appliance and the battery.

According to the battery housing, the battery using the battery housing, and the electronic device using the battery, the battery housing is made of the integrally formed plate body. The plate body is in the preset shape in the unfolded plate and is provided with the multiple preset folding portions. The plate body is separated to form the cover plate and the multiple side plates along the multiple folding portions. Therefore, the multiple side plates are configured to be folded along the corresponding folding portions and connected to form the middle housing with the closed peripheral sides and open ends, and the cover plate is configured to be folded along the preset folding portion and close the corresponding open end of the middle housing to form the accommodating space for accommodating the electrochemical unit inside the middle housing. By providing the battery housing, problems such as R round corners breakage and fold deformation due to stretching of the battery housing caused by a stretching manner can be avoided, processing difficulty of a structural member is reduced, and furthermore, occupation of an effective battery space caused by formation of a relatively wide flange at the periphery of the battery housing can be reduced, so that the energy density of the battery is improved. In addition, compared with a battery housing with a cover plate separated from a middle housing, a design of the integral battery housing has advantages that the connection positions and work procedures can be reduced, so that the airtightness of the formed battery housing can be improved, and the production work procedure can be simplified.

### BRIEF DESCRIPTION OF THE DRAWINGS

The present disclosure will be described in detail below with reference to the above and other objectives and advantages in conjunction with the accompanying drawings:
FIG. 1 is a schematic diagram of a logical structure of an electronic device according to an implementation.
FIG. 2 is a schematic three-dimensional structural view of a battery in an exemplary implementation.
FIG. 3 is a schematic structural view of a partially unfolded state of the battery in FIG. 2.
FIG. 4 is a schematic diagram of a battery housing in Embodiment 1, in which a plate body of the battery housing is in an unfolded state.
FIG. 5 is a schematic diagram of a battery housing in Embodiment 2, in which a plate body of the battery housing is in an unfolded state.
FIG. 6 is a schematic diagram of a battery housing in Embodiment 3, in which a plate body of the battery housing is in an unfolded state.
FIG. 7 is a schematic diagram of a battery housing in Embodiment 4, in which a plate body of the battery housing is in an unfolded state.
FIG. 8 is a schematic structural view of the battery housing in FIG. 4 or FIG. 5, in which a side plate of the battery housing is in a folded state.
FIG. 9 is a schematic structural view of the battery housing in FIG. 6 or FIG. 7, in which a side plate of the battery housing is in a folded state.
FIG. 10 is a schematic structural view of a battery housing.
FIG. 11 is a schematic structural view showing welding a cover plate, a lining plate, and an electrolyte solution filling port sealing cover of a battery housing.

### Descriptions of reference numerals:

- 10: Battery housing
- 20: Electrochemical unit
- 100: Electronic device
- 101: Battery
- 102: Electrical appliance
- 110: Plate body
- 120: Lining plate
- 130: Electrolyte solution filling port
- 140: Electrolyte solution filling port sealing cover
- 150: Positive terminal
- 160: Negative electrode connection sheet
- 170: First weld seam
- 180: Second weld seam
- 210: Negative tab
- 220: Positive tab
- 1101: Middle housing
- 1102: Open end
- 1111: First side plate
- 1112: Second side plate
- 1113: Third side plate
- 1114: Fourth side plate
- 1115: Fifth side plate
- 1121: First folding portion

- 1122: Second folding portion
- 1123: Third folding portion
- 1124: Fourth folding portion
- 1125: Fifth folding portion
- 1126: Sixth folding portion
- 1131: First cover plate
- 1132: Second cover plate

### DETAILED DESCRIPTION

The embodiments of the present disclosure are described in detail below, and the embodiments described with reference to accompanying drawings are exemplary.

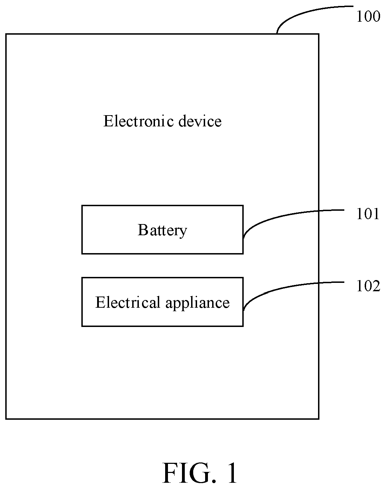

Referring to FIG. 1, an electronic device 100 disclosed by the present disclosure includes a battery 101 and an electrical appliance 102. The battery 101 is used for supplying electricity to the electrical appliance 102. In practical application, the electronic device 100 may be a random device using the battery 101 for electricity supply. For example, the electronic device may be a mobile electronic device such as a mobile phone, a tablet computer, and a notebook computer, and may also be traffic equipment such as a two-wheeled electric vehicle, an electric self-balancing vehicle, a pure electric vehicle, and a Hybrid vehicle. The specific type of the electronic device 100 is not limited as long as the electronic device may use the battery 101 disclosed by the present disclosure for electricity supply.

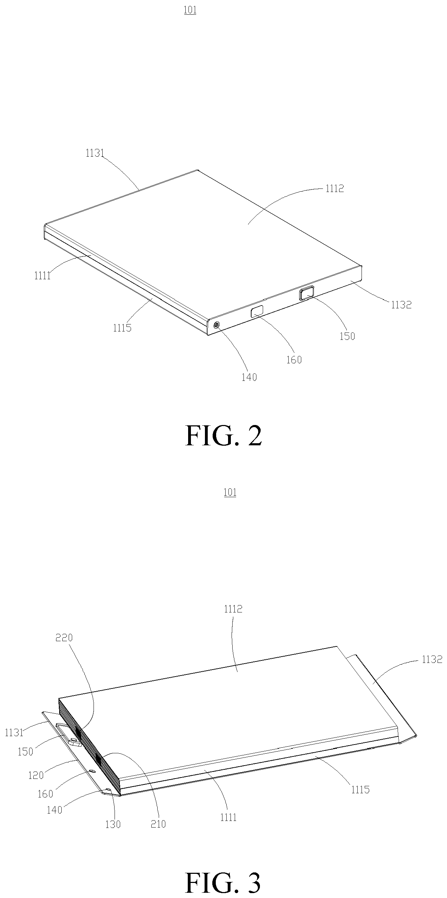

Referring to FIG. 2 to FIG. 3, the battery 101 includes at least one battery unit. The battery unit includes a battery housing 10 and an electrochemical unit 20 accommodated in the battery housing 10. The battery unit may be understood as a cell. The battery 101 may only include a cell, or may include multiple cells. That is, the battery 101 may be a battery pack or battery module including multiple cells.

Illustration will be provided below by taking the battery 101 only including one battery unit as an example. In this case, the battery 101 may be directly understood as a battery unit, so that under a circumstance that the battery 101 includes multiple battery units, it can be understood as that the battery pack or the battery module includes multiple batteries 101, and it will not be repeated.

In practical application, the battery 101 may be a lithium-ion battery, and may be a battery of another type. The electrochemical unit 20 may include an electrode assembly, i.e., a battery core, and may further include electrolyte solution or electrolyte, which may be determined according to the specific battery type.

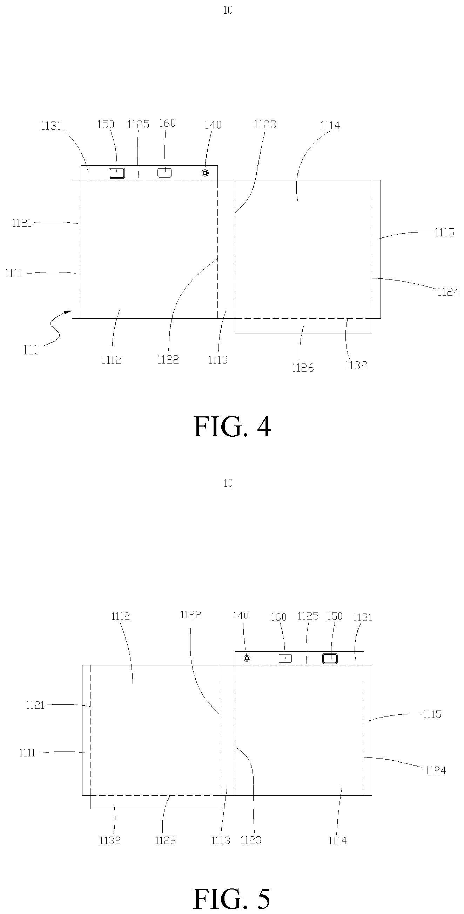

Referring to FIG. 4 to FIG. 11, the battery housing 10 includes an integrally formed plate body 110. The plate body 110 is in a preset shape in an unfolded state and is provided with multiple preset folding portions. The plate body 110 is separated to form a cover plate and multiple side plates along the multiple folding portions. The multiple side plates are configured to be folded along the corresponding folding portions and connected to form a middle housing 1101 with closed peripheral sides and open ends, and the cover plate is configured to be folded along the preset folding portion and close the corresponding open end 1102 of the middle housing 1101 to form an accommodating space for accommodating the electrochemical unit 20 inside the middle housing 1101.

Specifically, the multiple side plates and the cover plate of the battery housing 10 may be integrally formed to form a plate body 110. Preset positions of the multiple side plates and the cover plate distributed on the plate body 110 may be predetermined, and the multiple side plates and the cover plate may be separated by the multiple folding portions.

Some folding portions are used for determining folding positions of the multiple side plates. After the multiple side plates are folded along these folding portions, the middle housing 1101 with the closed peripheral sides and the open ends may be formed. Some other folding portions are used for determining the folding positions of the cover plate. After being folded along the folding portions, the cover plate can be turned to facing the corresponding open end of the middle housing 1101 so as to close the corresponding open end of the middle housing 1101, and the middle housing 1101 and the cover plate form a closed battery housing 10 together. An accommodating space is formed in the middle housing 1101, i.e., in the battery housing 10, and is used for accommodating the electrochemical unit 20.

In specific implementation, the folding portions may be folding lines. That is, the folding portions are predetermined folding positions or folding marks instead of physical structures. The folding portions may also be physical structures with certain dimensions. For example, the folding portions may occupy certain widths and areas on the plate body 110 as long as they may meet the requirement of determining the folding positions.

The battery housing 10 is formed by folding the integrally formed plate body 110. By providing the battery housing, problems such as R round corners breakage and fold deformation due to stretching of the battery housing 10 caused by a stretching manner can be avoided, processing difficulty of the battery housing 10 is reduced, and furthermore, occupation of an effective battery space caused by formation of a relatively wide flange at the periphery of the battery housing 10 can be reduced, so that the energy density of the battery is improved. In addition, compared with a split battery housing, a design of the integral battery housing 10 has advantages that the connection positions and work procedures can be reduced, so that the airtightness of the formed battery housing can be improved, and the production work procedure can be simplified.

It should be noted that the battery housing 10 may in an unfolded state or a partially closed state in sale, or may be in a fully closed state, and they all fall within the scope of the present disclosure. Specifically, there may be several product forms of the battery housing 10. For example, the battery housing 10 may be in a fully unfolded state in sale, and its form is a plate body 110 in the unfolded state. The multiple folding portions, the multiple side plates, and the cover plate may be distinguished in a form such as a marking form on the plate body 110. The battery housing 10 may be in a partially closed state in sale. For example, the battery housing 10 in sale may be in a state that the multiple side plates have been folded, the middle housing 1101 with the closed peripheral sides and the open ends has been formed, but the corresponding open end of the middle housing 1101 has not been closed by the cover plate. All these states can reflect the concept of the present disclosure, and shall fall within the protection scope of the present disclosure.

In some implementations, the formed battery housing 10 is generally in a regular shape, such as a cuboid shape, so that the design and processing may be convenient. In practical application, the formed battery housing 10 may be made to present an irregular shape or an integrally regular or locally special shape according to requirements. Detailed description will be provided below by taking the battery housing 10 in a cuboid shape in a formed state as an example. The circumstances that the battery housing 10 is in an irregular shape or an integrally regular or locally special shape may be realized by referring to the following manner.

Referring to FIG. 4 to FIG. 7, in some implementations, when the plate body 110 is in the unfolded state, the multiple side plates are distributed in a same direction. The plate body 110 includes two cover plates, and the two cover plates are distributed at two sides of the side plates along the distribution direction of the multiple side plates. The two cover plates are respectively named as a first cover plate 1131 and a second cover plate 1132.

The multiple side plates are in end-to-end connection after being folded along the corresponding folding portions to form a box-shaped middle housing 1101 with two open ends. The two cover plates respectively close the two open ends 1102 of the middle housing 1101 after being folded along the preset folding portions.

For example, in specific implementation, the first cover plate 1131 and the second cover plate 1132 may be distributed in four forms as shown in FIG. 4 to FIG. 7.

### Embodiment 1

As shown in FIG. 4, in Embodiment 1, the plate body 110 is approximately in a centrosymmetric shape, and the plate body 110 includes five side plates and two cover plates in an unfolded state. The five side plates are distributed in a same direction, and are sequentially named as a first side plate 1111, a second side plate 1112, a third side plate 1113, a fourth side plate 1114, and a fifth side plate 1115. The five side plates are formed by separating four folding portions. The four folding portions are respectively named as a first folding portion 1121, a second folding portion 1122, a third folding portion 1123, and a fourth folding portion 1124. The second side plate 1112 and the fourth side plate 1114 have a same shape, and form two opposite side surfaces of the middle housing 1101 after being folded. The first side plate 1111 and the fifth side plate 1115 are folded and connected, and a shape of the connected side plates is the same as a shape of the third side plate 1113. Moreover, the first side plate 1111 and the fifth side plate 1115 are folded and connected to form a side surface opposite to the third side plate 1113. Therefore, four side surfaces of the middle housing 1101 are formed. The shapes of every two opposite side surfaces are approximately the same. The term "approximately" the same herein refers to the non-absolute identical possibly caused by the processing precision influence, error, deviation, etc., or some unavoidably introduced or actively designed local shape differences in practical application.

The first folding portion 1121, the second folding portion 1122, the third folding portion 1123, and the fourth folding portion 1124 may be four mutually parallel folding lines. Correspondingly, the first side plate 1111, the second side plate 1112, the third side plate 1113, the fourth side plate 1114, and the fifth side plate 1115 are integrally in rectangular shapes, and form the five side plates after being separated by the four folding portions.

The two cover plates are distributed at two sides of the side plates along the distribution direction of the multiple side plates. The two cover plates are respectively named as a first cover plate 1131 and a second cover plate 1132. The first cover plate 1131 and the second cover plate 1132 are distributed at two sides of the distribution direction of the multiple side plates, so that the two opposite open ends 1102 of the middle housing 1101 can be closed after the middle housing 1101 is formed by the multiple side plates. In this implementation, the first cover plate 1131 is arranged at one side of the second side plate 1112, the second cover plate 1132 is arranged at one side of the fourth side plate 1114, and the second cover plate 1132 and the first cover plate are oppositely distributed at two sides of the plate body 110. A preset fifth folding portion 1125 is provided between the first cover plate 1131 and the second side plate 1112. A preset sixth folding portion 1126 is provided between the second cover plate 1132 and the fourth side plate 1114. The fifth folding portion 1125 and the sixth folding portion 1126 may also be two mutually parallel folding lines.

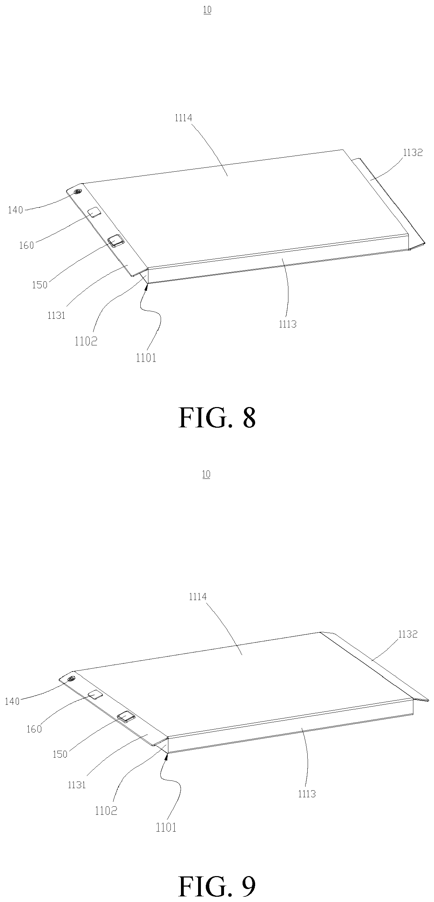

Referring to FIG. 8 together, when the plate body 110 is folded and formed, the first side plate 1111 can be folded for 90° along the first folding portion 1121 towards the second side plate 1112, the second side plate 1112 can be folded for 90° along the second folding portion 1122 towards the third side plate 1113, the third side plate 1113 can be folded for 90° along the third folding portion 1123 towards the fourth side plate 1114, and the fourth side plate 1114 can be folded for 90° along the fourth folding portion 1124 towards the fifth side plate 1115. Therefore, a shape of the second side plate 1112 is the same as that of the fourth side plate 1114, and after the folding, the two opposite side surfaces of the middle housing 1101 are formed. The first side plate 1111 and the fifth side plate 1115 are folded and connected, and a shape of the connected side plates is the same as a shape of the third side plate 1113. Moreover, the first side plate 1111 and the fifth side plate 1115 are folded and connected to form a side surface opposite to the third side plate 1113. Therefore, four side surfaces of the middle housing 1101 are formed. The shapes of every two opposite side surfaces are the same. That is, a cuboid-shaped housing with two open ends is formed. In addition, the first cover plate 1131 can be folded for 90° along the fifth folding portion 1125 towards the second side plate 1112 to close one open end of the cuboid-shaped housing, and the second cover plate 1132 can be folded for 90° along the sixth folding portion 1126 towards the fourth side plate 1114 to close another open end of the cuboid-shaped housing.

The five side plates and the two cover plates can be folded to form a cuboid-shaped closed battery housing 10, and a space inside the battery housing 10 can be used for the electrochemical unit 20 for preparing a battery 101. The first side plate 1111 and the fifth side plate 1115 may be connected in a welding manner. The first cover plate 1131 may be welded with an end surface of one open end of the cuboid-shaped housing to close the open end, and the second cover plate 1132 is welded with an end surface of another open end of the cuboid-shaped housing to close the another open end. In practical application, the above welding may also be replaced by other manners as long as they can realize the connection and closing of corresponding positions.

### Embodiment 2

As shown in FIG. 5, a structure of a plate body 110 in Embodiment 2 is basically identical to that in Embodiment 1. The differences only lie in that compared with Embodiment 1, Embodiment 2 is characterized in that a first cover plate 1131 is arranged at another side of a second side plate 1112, a second cover plate 1132 is arranged at another side of a fourth side plate 1114, and the second cover plate 1132 and the first cover plate are oppositely distributed at two sides of the plate body 110. Other implementations are basically identical, and are not repeated.

### Embodiment 3

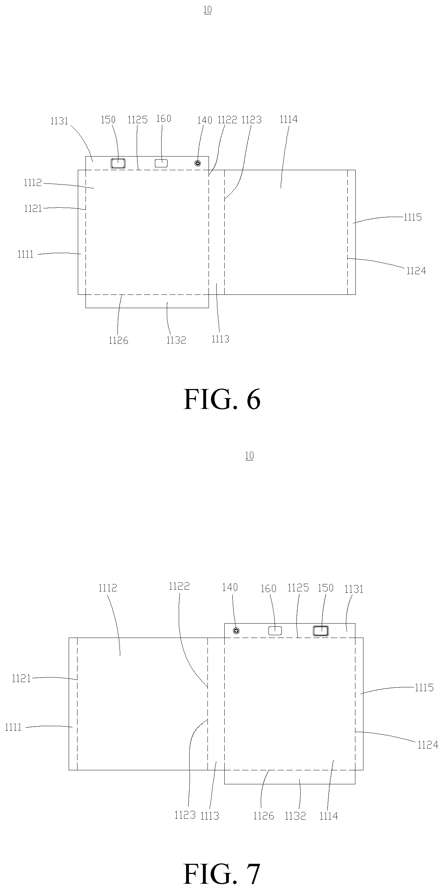

As shown in FIG. 6, a structure of a plate body 110 in Embodiment 3 is basically identical to that in Embodiment 1. The differences only lie in that in Embodiment 3, a first cover plate 1131 is arranged at one side of a second side plate 1112, and a second cover plate 1132 is arranged at the other opposite side of the second side plate 1112. A preset fifth folding portion 1125 is provided between the first cover plate 1131 and the second side plate 1112. A preset sixth folding portion 1126 is provided between the second cover plate 1132 and the second side plate 1112.

Referring to FIG. 9 together, in a folding forming process of the plate body 110, the first cover plate 1131 can be folded for 90° along the fifth folding portion 1125 towards the second side plate 1112 to close one open end of the cuboid-shaped housing, and the second cover plate 1132 can be folded for 90° along the sixth folding portion 1126 towards the second side plate 1112 to close another open end of the cuboid-shaped housing.

### Embodiment 4

As shown in FIG. 7, a structure of a plate body 110 in Embodiment 4 is basically identical to that in Embodiment 1. The differences only lie in that in Embodiment 4, a first cover plate 1131 is arranged at one side of a fourth side plate 1114, and a second cover plate 1132 is arranged at the other opposite side of the fourth side plate 1114. A preset fifth folding portion 1125 is provided between the first cover plate 1131 and the fourth side plate 1114. A preset sixth folding portion 1126 is provided between the second cover plate 1132 and the fourth side plate 1114.

In a folding forming process of the plate body 110, the first cover plate 1131 can be folded for 90° along the fifth folding portion 1125 towards the fourth side plate 1114 to close one open end of the cuboid-shaped housing, and the second cover plate 1132 can be folded for 90° along the sixth folding portion 1126 towards the fourth side plate 1114 to close another open end of the cuboid-shaped housing.

### Embodiment 5

In Embodiment 5,
when the plate body is in an unfolded state, the multiple side plates include: multiple side plates distributed in a same direction and a side plate located at one side of the side plates along the distribution direction of the multiple side plates. The multiple side plates distributed in the same direction are in end-to-end connection after being folded along the corresponding folding portions to form a box-shaped middle housing with two open ends, and the side plate closes one open end of the middle housing after being folded along the preset folding portion. One cover plate is provided and located at another side of the side plates along the distribution direction of the multiple side plates, and closes another open end of the middle housing after being folded along the preset folding portion.

That is, the plate body 110 in an unfolded state includes:
multiple side plates, a side plate, and a cover plate. The multiple side plates are distributed in the same direction and are in end-to-end connection after being folded along the corresponding folding portions to form a box-shaped middle housing with two open ends.

The side plate is located at one side of the side plates along the distribution direction of the multiple side plates, and closes an open end of the middle housing after being folded along the preset folding portion.

The cover plate is located at another side of the side plates along the distribution direction of the multiple side plates, and closes another open end of the middle housing after being folded along the preset folding portion.

In other words, the only difference between Embodiment 5 and any one of Embodiment 1 to Embodiment 4 lies in that in Embodiment 5, the plate body 110 may only include one cover plate. In some application situations, the battery housing 10 may be provided with a cover plate at one side for electrolyte solution filling, electricity outlet, etc. of the battery 101. Therefore, one of the two cover plates in any one of Embodiment 1 to Embodiment 4 may be set to be a side plate, and only one cover plate is remained. Other specific implementations may be realized with reference to any one embodiment, and are not singly illustrated through drawings.

In some implementations, the side plates and the cover plate are approximately rectangular shaped. A shape of the cover plate is matched with a shape of the corresponding open end of the middle housing. Specifically, the shape of the cover plate is matched with the shape of the corresponding open end of the middle housing. It refers to that the shape of the cover plate is basically identical to the shape of the corresponding open end of the middle housing, so that the requirement of closing an open end by welding the cover plate with an end surface of the open end of the cuboid-shaped housing.

For example, an outer edge size of the cover plate may be greater than an outer edge dimension of the end surface of the corresponding open end to ensure the closing effect. That is, in some implementations, the cover plate is folded along the preset folding portion and closes the corresponding open end of the middle housing, and an outer edge of the cover plate protrudes out of an outer periphery of the corresponding open end, so that the cover plate is enabled to close the corresponding open end.

In some implementations, the battery housing 10 further includes a lining plate 120, and the lining plate 120 is connected to one side of the cover plate. After the cover plate is folded along the preset folding portion and closes the corresponding open end of the middle housing 1101, the lining plate 120 is located at one side of the cover plate facing the corresponding open end. The battery housing 10 further includes an electrolyte solution filling port 130 penetrating through the lining plate 120 and the corresponding cover plate.

The lining plate 120 is connected to an inner side of the cover plate, so that the integral intensity of the cover plate is improved, the deformation risk during processing of an electrolyte solution filling port and other port positions in an upper cover plate is reduced, and the yield of a structural member is reduced. When the battery housing 10 includes a preset first cover plate 1131 and a second cover plate 1132, the lining plate 120 may be correspondingly arranged according to the setting condition of port positions. Specifically, when a port position is only set in one of the first cover plate 1131 and the second cover plate 1132, the lining plate 120 may be only arranged at the inner side of the first cover plate 1131 or the second cover plate 1132 with the port position. When port positions are set in both the first cover plate 1131 and the second cover plate 1132, the lining plate 120 may be respectively arranged at the inner side of the first cover plate 1131 and the second cover plate 1132 for reinforcement.

Correspondingly, the battery housing 10 further includes an electrolyte solution filling port sealing cover 140. The electrolyte solution filling port sealing cover 140 is configured to be connected with the cover plate and the lining plate 120 and close the electrolyte solution filling port 130.

A peripheral dimension of the lining plate 120 is less than a peripheral dimension of the cover plate, and the peripheral dimension of the cover plate is greater than a peripheral dimension of the corresponding open end 1102 of the middle housing 1101. After the cover plate and the lining plate 120 are connected into a whole, the peripheral side forms a step to achieve convenient assembly with the corresponding open end 1102.

In some implementations, a thickness of the lining plate 120 is greater than a thickness of the cover plate. Therefore, the thickness of the plate body 110 may be controlled within a small range while ensuring the intensity of the cover plate position.

For example, the plate body 110 may be a metal plate with a uniform thickness. Preset positions of the multiple side plates are connected in a welding manner to form the middle housing 1101 with closed peripheral sides and open ends, and the cover plate and the middle housing 1101 are welded to close the corresponding open end 1102 of the middle housing 1101. A material of the plate body 110 may include one or more of nickel, nickel alloy, carbon steel, and alloy steel.

In some implementations, an area of an outer side surface of the cover plate is less than an area of any one outer surface of the middle housing 1101. In other words, the area of the outer side surface of the cover plate is the smallest in the areas of all outer surfaces of the middle housing 1101. Therefore, a major welding position can avoid the big surface of the battery housing 10 to ensure the flatness of the biggest surface.

In specific implementation, the electrochemical unit 20 includes an electrode core, and the battery housing 10 further includes a positive terminal 150 and a negative electrode connection sheet 160. The positive terminal 150 may be a rivet connected onto the cover plate.

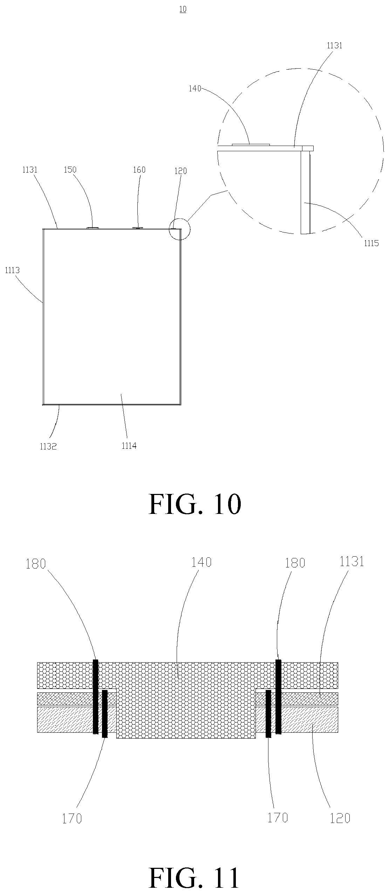

A negative lug 210 of the electrode core may be welded onto the lining plate 120 and is connected with the negative electrode connection sheet 160. The positive lug 220 may be welded onto the rivet. The rivet is subjected to insulating treatment from the cover plate and the lining plate 120. The electrolyte solution filling port cover 140 is welded, fused, and sealed with the cover plate and the lining plate 120 in a position of the electrolyte solution filling port 130, as shown in FIG. 11.

The cover plate and the lining plate 120 are made of double-layer or more-layer metal sheets through lap welding. By considering the sealing performance of the battery housing 10, at least two weld seams may be set during welding of the electrolyte solution filling port sealing cover 140 and the positive terminal 150.

For example, when the electrolyte solution filling port sealing cover 140 is welded, a circle of weld seam needs to be added in a position near the electrolyte solution filling port 130, and this weld seam is a first weld seam 170. A distance from the position of the first weld seam 170 to a position of an edge of the electrolyte solution filling port 130 ranges from 0.05 mm to 0.1 mm, so that the distance from the position of the first weld seam 170 to the edge of the electrolyte solution filling port 130 is enabled to be in a smaller design, and the residue of electrolyte solution between two layers of metal sheets of the lining plate 120 and the cover plate possibly caused by battery electrolyte solution filling and subsequent work procedures may be avoided. Therefore, the influence on the welding quality of the electrolyte solution filling port sealing cover 140 and the sealing performance of the battery housing 10 can be avoided. A weld seam for welding the electrolyte solution filling sealing cover 140 onto the cover plate and the lining plate 120 is a second weld seam 180. A distance from the second weld seam 180 to the edge of the electrolyte solution filling port 130 needs to be greater than or equal to the distance from the first weld seam 170 to the edge of the electrolyte solution filling port 130. In addition, the second weld seam 180 needs great welding energy to ensure the sealed connection of three layers of the first cover plate 1131, the lining plate 120, and the electrolyte solution filling port sealing cover 140. Therefore, the electrolyte solution leakage risk in the position of the electrolyte solution filling port 130 can be reduced. Identically, the welding of the positive terminal 150 may also use the same manner.

In this specification, the description of reference terms "an embodiment", "some embodiments", "an exemplary embodiment", "an example", "a specific example", or "some examples" mean that specific characteristics, structures, materials, or features described with reference to the embodiments or examples are included in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A battery housing, comprising an integrally formed plate body, the plate body being in a preset shape in an unfolded state and being provided with a plurality of preset folding portions, and the plate body being separated to form a cover plate and a plurality of side plates along the plurality of folding portions; and the plurality of side plates being configured to be folded along the corresponding folding portions and connected to form a middle housing with closed peripheral sides and open ends, and the cover plate being configured to be folded along the preset folding portion and close the corresponding open end of the middle housing to form an accommodating space for accommodating an electrochemical unit inside the middle housing.

2. The battery housing according to claim 1, wherein when the plate body is in the unfolded state, the plurality of side plates are distributed in a same direction; the plate body comprises two cover plates distributed at two sides of the side plates along the distribution direction of the side plates;
the plurality of side plates are in end-to-end connection after being folded along the corresponding folding portions to form a box-shaped middle housing with two open ends; and the two cover plates respectively close the two open ends of the middle housing after being folded along the preset folding portions.

3. The battery housing according to claim 1, wherein when the plate body is in the unfolded state,
the plurality of side plates comprise: a plurality of side plates distributed in a same direction and a side plate located at one side of the side plates along the distribution direction of the plurality of side plates; the plurality of side plates distributed in the same direction are in end-to-end connection after being folded along the corresponding folding portions to form a box-shaped middle housing with two open ends, and the side plate closes one open end of the middle housing after being folded along the preset folding portion; and
one cover plate is provided and located at another side of the side plates along the distribution direction of the plurality of side plates, and closes another open end of the middle housing after being folded along the preset folding portion.

4. The battery housing according to any one of claims 1 to 3, wherein the side plates and the cover plate are approximately rectangular shaped; and a shape of the cover plate is matched with a shape of the corresponding open end of the middle housing.

5. The battery housing according to claim 4, wherein the cover plate is folded along the preset folding portion and closes the corresponding open end of the middle housing, and an outer edge of the cover plate protrudes out of an outer periphery of the corresponding open end.

6. The battery housing according to any one of claims 1 to 5, further comprising a lining plate, and the lining plate being connected to one side of the cover plate;
after the cover plate being folded along the preset folding portion and closing the corresponding open end of the middle housing, the lining plate being located at one side of the cover plate facing the corresponding open end; and
the battery housing further comprising an electrolyte solution filling port penetrating through the lining plate and the corresponding cover plate.

7. The battery housing according to claim 6, wherein a peripheral dimension of the lining plate is less than a peripheral dimension of the cover plate, and the peripheral dimension of the cover plate is greater than a peripheral dimension of the corresponding open end of the middle housing.

8. The battery housing according to claim 6 or 7, wherein a thickness of the lining plate is greater than a thickness of the cover plate.

9. The battery housing according to any one of claims 6 to 8, further comprising an electrolyte solution filling port sealing cover, wherein the electrolyte solution filling port sealing cover is configured to be connected with the cover plate and the lining plate and to close the electrolyte solution filling port.

10. The battery housing according to claim 9, wherein a weld seam for welding the electrolyte solution filling port sealing cover with the cover plate and the lining plate comprises a first weld seam and a second weld seam, and a distance from the second weld seam to an edge of the electrolyte solution filling port is greater than a distance from the first weld seam to the edge of the electrolyte solution filling port.

11. The battery housing according to claim 10, wherein a distance from a position of the first weld seam to a position of the edge of the electrolyte solution filling port ranges from 0.05 mm to 0.1 mm.

12. The battery housing according to any one of claims 1 to 11, wherein the plate body is a metal plate with a uniform thickness, preset positions of the plurality of side plates are connected in a welding manner to form the middle housing with closed peripheral sides and open ends, and the cover plate and the middle housing are welded to close the corresponding open end of the middle housing.

13. The battery housing according to any one of claims 1 to 11, wherein an area of an outer side surface of the cover plate is less than an area of any one outer surface of the middle housing.

14. A battery, comprising at least one battery unit, wherein the battery unit comprises a battery housing according to any one of claims 1 to 13 and an electrochemical unit accommodated in the battery housing.

15. An electronic device, comprising an electrical appliance and a battery according to claim 14.
